# EUROPÄISCHE PATENTANMELDUNG

(11) **EP 2 468 823 A1**
(43) Veröffentlichungstag der Anmeldung: **27.06.2012**
(21) Anmeldenummer: 12159787.6
(22) Anmeldetag: 07.02.2008
(51) Int. Cl.: C09C 1/00, C09C 1/62, C09C 1/64, C09C 1/66, C09D 5/03, C09D 5/36, C09D 7/12

(54) **Chemikalienbeständige Metalleffektpigmente, Verfahren zu deren Herstellung und Verwendung derselben**

(30) Priorität: 07.02.2007 DE 102007006820
(62) Teilanmeldung aus: 08715699.8
(71) Anmelder: Eckart GmbH, 91235 Hartenstein (DE)
(72) Erfinder: Schumacher, Dirk, 91257 Pegnitz (DE); Schuster, Thomas, 91207 Lauf (DE)
(74) Vertreter: LOUIS, PÖHLAU, LOHRENTZ

(57) **Zusammenfassung**

Die Erfindung betrifft Metalleffektpigmente mit einem plättchenartigen Metallkern und einer den plättchenartigen Metallkern umhüllenden homogenen Kunstharzbeschichtung, wobei die Kunstharzbeschichtung Polyacrylat und/oder Polymethacrylat sowie organofunktionelles Silan umfasst. Die Erfindung betrifft ferner eine Verfahren zur Herstellung solcher Metalleffektpigmente als auch deren Verwendung.

## Beschreibung

Die vorliegende Erfindung betrifft gegenüber Chemikalien und Korrosionseinflüssen beständige und elektrisch nicht leitfähige Metalleffektpigmente, die eine homogene Kunstharzschicht aufweisen.

Außerdem betrifft die vorliegende Erfindung ein neues Verfahren zur Herstellung dieser erfindungsgemäßen Metalleffektpigmente sowie deren Verwendung in Farben, Druckfarben, Lacken, Elektrotauchlacken, Pulverlacken, Kunststoffen sowie Kosmetika.

Die optische Wirkung von Metalleffektpigmenten beruht auf der gerichteten Reflexion von Licht an parallel ausgerichteten plättchenförmigen Pigmentteilchen. Mit dem Betrachtungswinkel ändern sich die Helligkeit und gelegentlich auch der Farbton. Für Metalleffektpigmente charakteristisch sind ihr metallischer Glanz und ihr hervorragendes Deckvermögen. Wichtig für den optischen Eindruck sind eine optimale Verteilung sowie eine ausreichende Chemikalienbeständigkeit der Metalleffektpigmente im Anwendungsmedium.

Nachteiligerweise sind Metalleffektpigmente in einem wässrigen Medium nur eingeschränkt stabil. Beispielsweise zersetzen sich Aluminiumpigmente in Wasser vergleichsweise rasch unter Bildung von Wasserstoff und Aluminiumhydroxid. Um dies zu verhindern, werden die Metallpigmentoberflächen herkömmlicherweise durch Phosphatierung, Chromatierung oder Silanisierung geschützt. Daneben gewinnen auch kunstharzüberzogene Metalleffektpigmente aufgrund ihrer Nichtleitfähigkeit und ihrer besseren Verträglichkeit in Lacksystemen immer mehr an Bedeutung.

Die EP 0 477 433 B1 beschreibt kunstharzbeschichtete Metallpigmente auf Aluminiumbasis, wobei eine Kunstharzschicht über eine auf der Pigmentoberfläche aufgebrachte Siloxanbeschichtung kovalent gebunden ist. Die Siloxanschicht soll dabei als Haftvermittler für eine gute Anbindung des Kunstharzüberzugs auf der Pigmentoberfläche sorgen. Es hat sich jedoch gezeigt, daß es unter Einwirkung von Scherkräften zu einer teilweisen Ablösung der Kunstharzschicht kommen kann. Diese Pigmente sind somit über einen längeren Zeitraum nicht zuverlässig gasungsund lagerstabil.

Die EP 0 280 749 B1 offenbart harzbeschichtete Metallpigmente, wobei zwischen Pigmentoberfläche und Kunstharzschicht eine ethylenisch ungesättigte Carbonsäure und/oder ein Phosphorsäuremono- oder -diester als Haftvermittler angeordnet ist. Die Carboxylgruppen des Carbonsäuremonomers bzw. die Phosphatgruppen des Phosphatmonomers binden dabei an die Metallpigmentoberfläche. Mit den so an der Metallpigmentoberfläche angeordneten ethylenischen Doppelbindungen werden weitere Monomeren unter Ausbildung einer stark vernetzten Kunstharzschicht umgesetzt. Trotz dieser dreidimensionalen Struktur des Kunstharzüberzugs ist die Gasungsstabilität dieser Metallpigmente gering.

Aus der WO 2005/063897 A2 sind chemisch und mechanisch beständige Metalleffektpigmente bekannt, die mit chemisch und/oder unter Einwirkung von beispielsweise UV- oder IR-Strahlung vernetzbaren oligomeren und/oder polymeren Bindemitteln beschichtet sind. Die Metalleffektpigmente können auf diese Weise in einem polymeren Film eingebettet werden. Die Bindemittel sind nach der Beschichtung der Metallpigmente noch härtbar oder polymerisierbar, weshalb die Metallpigmente in Pulverlack Verwendung finden. Während der Beschichtung bzw. beim Verdampfen des Lösungsmittels können die Bindemittel zwar leicht anpolymerisieren, sie härten jedoch nicht aus. Eine Vorbeschichtung der Pigmentoberfläche durch funktionalisierte Silane bzw. Polymere oder phosphororganische Verbindungen verbessert die Haftung der Bindemittelumhüllung. Aus der EP 1 084 198 B1 sind Effektpigmente, deren Oberfläche mit Orientierungshilfsmitteln modifiziert wurde, bekannt. Das in monomerer oder polymerer Form vorliegende Orientierungshilfsmittel trägt mindestens zwei verschiedene funktionelle Gruppen, die durch einen Spacer voneinander getrennt sind. Eine der funktionellen Gruppen ist chemisch an das Pigment gebunden, die andere kann z.B. mit dem Bindemittel eines umgebenden Lacks in einer Art Vernetzungsreaktion reagieren und somit zur Stabilisierung des Pigments mit non-leafing-Verhalten beitragen. Man erhält Effektpigmente, die einerseits leicht vom Bindemittel bzw. Lösungsmittel der Farbe oder des Lacks benetzt werden und sich gut im flüssigen Lackfilm orientieren können und andererseits mit der umgebenden Bindemittelmatrix einen innigen Verbund eingehen. Die Schwitzwasserbeständigkeit eines gehärteten Lacks kann auf diese Weise erheblich verbessert werden.

Die US 4,213,886 offenbart ein beschichtetes Aluminiumpigment, wobei in einer ersten Schicht ein Silan mit einer Monoethylengruppe und nachfolgend eine Acrylatharzschicht aufgebracht ist. Es hat sich gezeigt, dass diese zweischichtige Struktur aus Silanschicht mit nachfolgender Acrylatschicht gegenüber einem Eindringen von Wasser und Chemikalien nicht ausreichend dicht ist.

Des Weiteren werden in der DE 10 2005 037 611 Metalleffektpigmente mit anorganisch/ organischer Mischschicht beschrieben, die neben einer hohen mechanischen Stabilität auch eine gute Gasungsstabilität besitzen. In der Mischschicht sind dabei organische Oligomere und/oder Polymere mit einem anorganischen Netzwerk, bestehend aus anorganischen Oxidkomponente(n), zumindest teilweise kovalent über Netzwerkbildner verbunden. Die Netzwerkbildner können organofunktionelle Silane sein.

In der DE 10 2004 006 145 A1 werden plättchenförmige Substrate mit funktionellem Multilayeraufbau, bestehend aus einer oder mehreren Schichten eines Polymers und einer oder mehreren Schichten eines Silans, offenbart. Die Schichten aus ein oder mehreren Silanen üben dabei eine Barrierefunktion aus und die ein oder mehreren Polymerschichten stabilisieren die Partikel gegenüber Agglomeration und mechanischen Einflüssen.

Der vorliegenden Erfindung liegt die Aufgabe zugrunde, gegenüber Chemikalien und Korrosionseinflüssen beständige und elektrisch nicht leitfähige Metalleffektpigmente bereitzustellen, die sich durch insgesamt vorteilhafte Anwendungseigenschaften, insbesondere hohe Chemikalienbeständigkeit, Gasungs- und Lagerstabilität sowie elektrische Nichtleitfähigkeit auszeichnen. Weiterhin ist es Aufgabe der Erfindung, ein Verfahren zur Herstellung dieser gegenüber Chemikalien und Korrosionseinflüssen beständigen und elektrisch nicht leitfähigen Metalleffektpigmente zur Verfügung zu stellen.

Die Aufgabe wurde gelöst durch Bereitstellung von Metalleffektpigmenten mit einem plättchenartigen Metallkern und einer den plättchenartigen Metallkern umhüllenden homogenen Kunstharzbeschichtung, wobei die Kunstharzbeschichtung Polyacrylat und/oder Polymethacrylat sowie organofunktionelles Silan umfasst.

Bevorzugte Weiterbildungen sind in den Unteransprüchen angegeben.

Die Aufgabe wird ferner durch Bereitstellung eines Verfahrens zur Herstellung der Metalleffektpigmente nach einem der Ansprüche 1 bis 13 gelöst, wobei der plättchenartige Metallkern in Gegenwart von Acrylatverbindungen und/oder Methacrylatverbindungen und organofunktionellem Silan umhüllend und homogen beschichtet wird.

Schließlich wird die der Erfindung zugrundeliegende Aufgabe durch die Verwendung der Metalleffektpigmente nach einem der Ansprüche 1 bis 13 in Farben, Druckfarben, Lacken, Pulverlacken, Kunststoffen und Kosmetika gelöst.

Unter einer "homogenen Kunstharzbeschichtung" wird im Sinne der Erfindung verstanden, daß die Kunstharzschicht nicht aus mehreren separaten Schichten aufgebaut ist, sondern aus einer einzigen Schicht, die aus organofunktionellem Silan und Acrylat- und/oder Methacrylatverbindung(en) homogen, d.h. ohne erkennbare Unterstrukturen, aufgebaut ist.

Unter einem "plättchenartigen Metallkern" oder "Metallkern" werden im Sinne der vorliegenden Erfindung insbesondere herkömmliche plättchenartige Metalleffektpigmente verstanden, die noch keine Kunstharzbeschichtung wie die Metalleffektpigmente gemäß der vorliegenden Erfindung aufweisen.

Es hat sich überraschend gezeigt, daß eine solche homogene, aus organofunktionellem Silan und Acrylat- und/oder Methacrylatverbindung(en) bestehende Kunstharzschicht äußerst zuverlässig auf der Metallpigmentoberfläche haftet, die auch gegenüber Scherkräften mechanisch stabil ist. Darüber hinaus hat sich gezeigt, ,daß diese Kunstharzschicht, die auch als Kunstharzmischschicht bezeichnet werden kann, die Metallpigmente dauerhaft gegenüber Chemikalien oder stark aggressiven oder korrodierenden Medien schützt, so daß deren optischen Eigenschaften, wie Glanz und Farbe, nicht beeinträchtigt werden.

Die erfindungsgemäßen Metalleffektpigmente zeichnen sich weiterhin dadurch aus, daß die homogene Kunstharzschicht relativ dünn sein kann, wodurch zum einen die Herstellungskosten aufgrund des geringeren Materialverbrauchs gesenkt werden und zum anderen eine Beeinflussung von Glanz und Farbe der Metalleffektpigmente durch die umhüllend aufgebrachte Kunstharzschicht minimiert wird.

Des weiteren ist vorteilhaft, daß die homogene Kunstharzschicht in einem einstufigen Verfahren, welches nur eine äußerst einfache Verfahrensführung erfordert, aufgebracht werden kann, wodurch die Herstellungskosten der Pigmente weiterhin gesenkt werden können.

Gemäß einer bevorzugten Weiterbildung der Erfindung liegt das organofunktionelle Silan in dem Polyacrylat und/oder Polymethacrylat vor und/oder ist einpolymerisiert.

Weiterhin ist bevorzugt, daß die Kunstharzbeschichtung kein anorganisches Netzwerk aufweist. Es hat sich gezeigt, daß eine reine und homogene Kunstharzbeschichtung, wie in Anspruch 1 definiert, ausreichend ist, um sowohl gegenüber Korrosion als auch aggressiven Chemikalien beständige Metalleffektpigmente bereitzustellen. Die Aufbringung einer reinen Kunststoffschicht ist verfahrenstechnisch einfacher als von einer Schicht, bei der in der Kunstharzschicht ein anorganisches Netzwerk vorliegt.

Das organofunktionelle Silan weist dabei wenigstens eine funktionelle Gruppe auf, die mit einer Acrylatgruppe und/oder Methacrylatgruppe des Polyacrylats und/oder Polymethacrylats chemisch umgesetzt sein kann. Als sehr geeignet haben sich radikalisch polymerisierbare organische funktionelle Gruppen erwiesen. Vorzugsweise wird die wenigstens eine funktionelle Gruppe aus der Gruppe ausgewählt, die aus Acryl, Methacryl, Vinyl, Allyl, Ethinyl sowie weiteren organischen Gruppen mit ungesättigten Funktionen besteht.

Vorzugsweise weist das organofunktionelle Silan wenigstens eine Acrylat- und/oder Methacrylatgruppe auf, da diese mit den zur Erzeugung des Polyacrylates und/oder Polymethacrylates verwendeten Acrylat- bzw. Methacrylatverbindungen völlig problemlos unter Ausbildung einer homogenen Kunststoffschicht umgesetzt werden können.

Das organofunktionelle Silan kann als Monomer oder auch als Polymer vorliegen. Wesentlich ist, daß das, monomere oder polymere, organofunktionelle Silan wenigstens eine funktionelle Gruppe aufweist, die eine chemische Umsetzung mit einer Acrylat- und/oder Methacrylatgruppe erlaubt. Es können auch Mischungen von verschiedenen monomeren und/oder polymeren organofunktionellen Silanen in der Kunstharzschicht enthalten sein.

Es hat sich als wesentlich herausgestellt, daß das organofunktionelle Silan mit dem Polyacrylat und/oder Polymethacrylat homogen vermengt vorliegt. Das organofunktionelle Silan muß dabei nicht vollständig mit den Polyacrylat und/oder Polymethacrylat chemisch umgesetzt sein. Die chemische Umsetzung zwischen organofunktionellem Silan und Polyacrylat und/oder Polymethacrylat kann mithin nur teilweise erfolgt sein, so daß beispielsweise nur 30 % oder 40 % des vorliegenden organofunktionellen Silans, bezogen auf das Gesamtgewicht an organofunktionellem Silan, mit Polyacrylat und/oder Polymethacrylat umgesetzt sind.

Vorzugsweise liegt das organofunktionelle Silan in dem Polyacrylat und/oder Polymethacrylat weitgehend einpolymerisierter Form, d.h. weitgehend chemisch umgesetzter Form vor. Vorzugsweise sind wenigstens 60 %, weiter bevorzugt wenigstens 70 %, noch weiter bevorzugt wenigstens 80 % des vorliegenden organofunktionellen Silans, jeweils bezogen auf das Gesamtgewicht des organofunktionellen Silans, mit Polyacrylat und/oder Polymethacrylat umgesetzt. Weiterhin bevorzugt liegen wenigstens 90 % oder wenigstens 95 % des organofunktionellen Silans in mit Polyacrylat und/oder Polymethacrylat umgesetzter Form vor. Weiterhin ist bevorzugt, wenn die Umsetzung zu 100 % erfolgt ist.

Gemäß einer weiteren bevorzugten Variante der vorliegenden Erfindung ist das Polyacrylat und/oder Polymethacrylat mit oder aus Verbindungen mit mehreren Acrylat- und/oder Methacrylatgruppen aufgebaut. Es hat sich als vorteilhaft erwiesen, wenn die verwendeten Acrylat- und/oder Methacrylatausgangsverbindungen zwei oder mehr Acrylat- und/oder Methacrylatgruppen aufweisen.

Neben Acrylat- und/oder Methacrylatverbindungen können auch weitere Monomere und/oder Polymere in der Kunstharzbeschichtung der erfindungsgemäßen Metalleffektpigmente vorliegen. Vorzugsweise beträgt der Anteil an Acrylat- und/oder Methacrylatverbindungen einschließlich von organofunktionellem Silan wenigstens 70 Gew.-%, weiter bevorzugt wenigstens 80 Gew.-%, noch weiter bevorzugt wenigstens 90 Gew.-%, jeweils bezogen auf das Gesamtgewicht der Kunstharzbeschichtung. Gemäß einer bevorzugten Variante ist die Kunstharzbeschichtung ausschließlich aus Acrylat- und/oder Methacrylatverbindungen und einem oder mehreren organofunktionellen Silanen aufgebaut, wobei zusätzlich noch Additive wie Korrosionsinhibitoren, Buntpigmente, Farbstoffe, UV-Stabilisatoren, etc. oder Mischungen davon in der Kunstharzbeschichtung enthalten sein können.

Es ist dabei erfindungsgemäß bevorzugt, dass die Acrylat- und/oder Methacrylatausgangsverbindungen mit mehreren Acrylatgruppen und/oder Methacrylatgruppen jeweils mindestens drei Acrylat- und/oder Methacrylatgruppen aufweisen. Weiterhin bevorzugt können diese Ausgangsverbindungen jeweils auch vier oder fünf Acrylat- und/oder Methacrylatgruppen aufweisen.

Die Verwendung mehrfachfunktioneller Acrylate und/oder Methacrylate erlaubt die Bereitstellung von Metalleffektpigmenten mit sehr guter Chemikalienbeständigkeit sowie höherem elektrischem Widerstand.

Die unter Verwendung von mehrfachfunktionellen Acrylaten und/oder Methacrylaten hergestellten erfindungsgemäßen Metalleffektpigmente sind elektrisch nicht leitend, was die Einsatzmöglichkeiten von Metalleffektpigmenten beträchtlich erweitert. Es ist mithin unter Verwendung der erfindungsgemäßen Metalleffektpigmente möglich, Metalleffektlackierungen auf Gegenständen aufzubringen, die elektrisch nicht leitend sein dürfen, wie beispielsweise Schutzgehäuse, Isolatoren, etc..

Es hat sich überraschend gezeigt, daß bereits zwei oder drei Acrylat- und/oder Methacrylatgruppen pro Acrylat- und/oder Methacrylatausgangsverbindung in Verbindung mit einem organofunktionellen Silan ausreichen, um eine chemisch äußerst beständige und elektrisch nichtleitende Kunstharzschicht auf dem Metalleffektpigment zu erzeugen.

Die Kunstharzschicht weist, insbesondere bei 2 bis 4 Acrylat- und/oder Methacrylatgruppen pro Acrylat- und/oder Methacrylatausgangsverbindung, überraschenderweise eine außerordentliche Dichtigkeit und Festigkeit auf, ohne dabei spröde zu sein. Als äußerst geeignet haben sich 3 Acrylat- und/oder Methacrylatgruppen pro Acrylat- und/oder Methacrylatausgangsverbindung erwiesen. Diese in der Kombination wertvollen mechanischen Eigenschaften ermöglichen es, die erfindungsgemäßen Metalleffektpigmente auch gegenüber großen Scherkräften, beispielsweise beim Durchpumpen durch Rohrleitungen, wie in einer Ringleitung, auszusetzen, ohne daß es dabei zu einer Beschädigung oder Ablösung der Kunstharzschicht von der Metalleffektpigmentoberfläche kommt.

Gemäß einer weiteren bevorzugten Ausführungsform beträgt das Gewichtsverhältnis von Polyacrylat und/oder Polymethacrylat zu organofunktionellem Silan 10:1 1 bis 0,5:1 beträgt. Weiterhin bevorzugt liegt das Gewichtsverhältnis von Polyacrylat und/oder Polymethacrylat zu organofunktionellem Silan in einem Bereich von 7:1 bis 1:1 1 beträgt.

Es hat sich gezeigt, daß auch ein, bezogen auf das Gewicht, Unterschuß an organofunktionellem Silan gegenüber Polyacrylat- und/oder Polymethacrylat ausreichend ist, um eine auf der Metalleffektpigmentoberfläche fest anhaftende und zugleich gegenüber Chemikalien oder stark korrodierende Umgebungsbedingungen beständige Kunstharzschicht aufzubringen.

Gemäß einer bevorzugten Ausführungsform der Erfindung weisen die Metalleffektpigmente der vorliegenden Erfindung eine Beschichtung auf, die aus mindestens zwei Monomerkomponenten a) und b) aufgebaut sind, wobei a) mindestens ein Acrylat und/oder Methacrylat ist und b) mindestens ein organofunktionelles Silan, welches vorzugsweise mindestens eine radikalisch polymerisierbare Funktionalität aufweist.

Die Komponente a) umfaßt dabei bevorzugt mehrfachfunktionelle Acrylate und/oder Methacrylate, wobei die entsprechenden Monomeren di-, tri- oder mehrfach funktionelle Acrylat- und/oder Methacrylatgruppen aufweisen.

Beispiele geeigneter difunktioneller Acrylate a) sind: Allylmethacrylat, Bisphenol-A-dimethacrylat, 1,3-Butandioldimethacrylat, 1,4-Butandioldimethacrylat, Ethylenglykoldimethacrylat, 1,6-Hexandioldiacrylat, 1,6-Hexandioldimethacrylat, Diethylenglykoldimethacrylat, Diurethandimethacrylat, Dipropylenglykoldiacrylat, 1,12-Dodecandioldimethacrylat, Ethylenglykoldimethacrylat, Methacrylsäureanhydrid, N,N-Methylen-bis-methacrylamid, Neopentylglykoldimethacrylat, Polyethylenglykoldimethacrylat, Polyethylenglykol-200-diacrylat, Polyethylenglykol-400-diacrylat, Polyethylenglykol-400-dimethacrylat, Tetraethylenglykoldiacrylat, Tetraethylenglykoldimethacrylat, Tricyclodecandimethanoldiacrylat, Tripropylenglykoldiacrylat, Triethylenglykoldimethacrylat oder Mischungen davon.

Als höherfunktionelle Acrylate können erfindungsgemäß z. B. Pentaerythritoltriacrylat, Trimethylolpropantriacrylat, Trimethylolpropantrimethacrylat, Tris-(2-hydroxyethyl)isocyanurattriacrylat, Pentaerythritoltetraacrylat, Dipentaerythritolpentaacrylat oder von Mischungen davon verwendet werden.

Besonders bevorzugt sind trifunktionelle Acrylate und/oder Methacrylate.

Als bei der vorliegenden Erfindung sehr geeignete Acrylate haben sich Dipentaerythritolpentaacrylat, Pentaerythritoltriacrylat, Pentaerythritoltetraacrylat, Trimethylolpropantriacrylat, Trimethylolpropantrimethacrylat, Tris-(2-hydroxyethyl)isocyanurattriacrylat, 1,6-Hexandioldimethacrylat oder deren Mischungen erwiesen.

Als organofunktionelle Silane b) können erfindungsgemäß beispielsweise (Methacryloxymethyl)methyldimethoxysilan, Methacryloxymethyltrimethoxysilan, (Methacryloxymethyl)methyldiethoxysilan, Methacryloxymethyltriethoxysilan, 2-Acryloxyethylmethyldimethoxysilan, 2-Methacryloxyethyltrimethoxysilan, 3-Acryloxypropylmethyldimethoxysilan, 2-Acryloxyethyltrimethoxysilan, 2-Methacryloxyethyltriethoxysilan, 3-Acryloxypropyltrimethoxysilan, 3-Acryloxypropyltripropoxysilan, 3-Methacryloxypropyltriethoxysilan, 3-Methacryloxypropyltrimethoxysilan, 3-Methacryloxypropyltriacetoxysilan, 3-Methacryloxypropymethyldimethoxysilan, Vinyltrichlorsilan, Vinyltrimethoxysilan Vinyldimethoxymethylsilan, Vinyltriethoxysilan, Vinyltris(2-methoxyethoxy)silan, Vinyltriacetoxysilan oder Mischungen davon verwendet werden.

Besonders bevorzugt sind acrylat- und/oder methacrylatfunktionelle Silane.

Als bei der vorliegenden Erfindung sehr geeignete organofunktionelle Silane haben sich 2-Methacryloxyethyltrimethoxysilan, 2-Methacryloxyethyltriethoxysilan, 3-Methacryloxypropyltriethoxysilan, 3-Methacryloxypropyltrimethoxysilan, (Methacryloxymethyl)methyldimethoxysilan, Vinyltrimethoxysilan oder deren Mischungen erwiesen.

Die vorgenannten Verbindungen sowie weitere bei der vorliegenden Erfindung verwendbaren geeigneten Monomere sind beispielsweise bei Degussa AG, Frankfurt, Deutschland; Röhm GmbH & Co. KG, Darmstadt, Deutschland; Sartomer Europe, Paris, Frankreich; GE Silicons, Leverkusen, Deutschland oder Wacker Chemie AG, München, Deutschland erhältlich.

Die Kunstharzschicht der erfindungsgemäßen Metalleffektpigmente weist vorzugsweise eine mittlere Schichtdicke in einem Bereich von 20 nm bis 200 nm, weiter bevorzugt von 30 nm bis 100 nm, auf. Gemäß einer weiteren Variante der Erfindung liegt die mittlere Schichtdicke in einem Bereich von 40 bis 70 nm. Erstaunlicherweise reichen bei den erfindungsgemäßen Metalleffektpigmenten äußerst geringe mittlere Schichtdicken aus, um die gegenüber aggressiven Umgebungsbedingungen sehr empfindlichen Metallkerne dieser Pigmente zuverlässig zu schützen. Insbesondere kommt es bei den angegebenen mittleren Schichtdicken zu keiner merklichen Beeinträchtigung von Glanz oder Farbe der Metallkerne durch die Kunstharzschicht.

Erfindungsgemäß ist bevorzugt, daß der plättchenartige Metallkern Metalle aus der Gruppe, die aus Aluminium, Kupfer, Zink, Zinn, Goldbronze, Messing, Eisen, Titan, Chrom, Nickel, Silber, Gold, Stahl sowie deren Legierungen und Gemischen davon besteht, enthalten oder daraus bestehen.

Gemäß einer weiteren erfindungsgemäßen Variante ist der plättchenartige Metallkern ein Aluminium- oder Goldbronzepigment.

Die vorzugsweise verwendeten Aluminiumeffektpigmente können hierbei als Leafing-Pigmente (vgl. Römpp Lexikon Lacke und Druckfarben, Georg Thieme Verlag, 1998, S. 351 "Leafing-Pigmente") oder als Non-Leafing-Pigmente vorliegen (vgl. Römpp Lexikon Lacke und Druckfarben, Georg Thieme Verlag, 1998, S. 412 "Non-Leafing-Pigmente"). Leafing-Pigmente sind Effektpigmente, die sich an der Oberfläche eines Flüssigkeitsfilmes, beispielsweise eines Lack- oder Farbfilmes anordnen. Bei Leafing-Pigmenten handelt es sich um Metalleffektpigmente, deren Oberfläche in der Regel mit Stearinsäure belegt ist. Non-Leafing-Pigmente sind Effektpigmente, die sich in dem Flüssigkeitsfilm, beispielsweise Lack- oder Farbfilm, d.h. nicht an dessen Oberfläche anordnen. Bei Non-Leafing-Pigmenten handelt es sich um Metalleffektpigmente, deren Oberfläche in der Regel mit Ölsäure belegt ist.

Die bei der vorliegenden Erfindung verwendeten plättchenartigen Metallkerne oder herkömmlichen Metalleffektpigmente können mithin ein Leafing- oder ein Non-Leafing-Verhalten aufweisen.

Metalleffektpigmente sind entweder plättchenförmig und im Wesentlichen rund (sogenannter Silberdollar-Typ) oder plättchenförmig und im Wesentlichen "cornflakeartig" geformt (sogenannter Cornflake-Typ).

Der plättchenartige Metallkern der erfindungsgemäßen Metalleffektpigmente, d.h. ohne nachfolgende Beschichtung mit Kunstharz, besitzt vorzugsweise eine mittlere Dicke von ca. 20 nm bis ca. 2 µm, weiter bevorzugt von 25 nm bis 1 µm und noch weiter bevorzugt von 30 nm bis 600 nm.

Gemäß einer weiteren bevorzugten Ausführungsform der Erfindung beträgt die mittlere Dicke des Metallkernes 20 - 100 nm. Als bei der vorliegenden Erfindung sehr geeignet haben sich Aluminiumpigmente erwiesen, wie sie beispielsweise in der WO 2004/087816, deren Offenbarungsgehalt hiermit unter Bezugnahme aufgenommen ist, beschrieben sind. Derartig dünne Pigmente weisen optisch besonders hochwertige Eigenschaften auf.

Zwischen Metallpigmentoberfläche des Metallkernes und der Kunstharzbeschichtung kann bei den erfindungsgemäßen Metallpigmenten eine Vorbeschichtung, die die Haftung zwischen Metalloberfläche und dem Kunstharzüberzug verbessert, angeordnet sein. Als derartige Vorbeschichtung kommen beispielsweise funktionalisierte Silane bzw. Polymere oder phosphororganische Verbindungen in Betracht.

Als weitere Bestandteile können die erfindungsgemäßen Metallpigmente in der Kunstharzbeschichtung weitere Zusatzstoffe enthalten wie beispielsweise organische und/oder anorganische Buntpigmente, Farbstoffe, Korrosionsinhibitoren und/oder UV-Stabilisatoren.

Des Weiteren ist Gegenstand der Erfindung die Verwendung der hochstabilen und elektrisch nicht leitfähigen Metalleffektpigmente in Farben, Druckfarben, Lacken, Pulverlacken, Elektrotauchlacken, Kunststoffen, Beschichtungszusammensetzungen und Kosmetika sowie in Formulierungen, die die erfindungsgemäßen Metalleffektpigmente enthalten. Die erfindungsgemäßen Pigmente können hierbei auch in Mischung mit weiteren Pigmenten, wie z.B. nichtmetallischen Effektpigmenten, vorliegen.

Die erfindungsgemäßen Metalleffektpigmente können dabei als gering- oder nichtstaubende Pigmentformulierung, beispielsweise in Form einer Paste, eines Granulates, von Briketts, Tabletten, Pellets, Chips oder Würstchen, vorliegen. Die vorgenannten Darreichungsformen sind beispielsweise dadurch erhältlich, daß die erfindungsgemäßen Metalleffektpigmente mit einem Lösungsmittel oder einem Lösungsmittelgemisch, beispielsweise organischem Lösungsmittel und/oder Wasser, angeteigt und nachfolgend unter Entfernung des Lösungsmittels oder Lösungsmittelgemisches beispielsweise durch Komprimieren, Tablettieren, Pelletieren oder Extrudieren, etc. in die gewünschte Form überführt werden. Der Gehalt an Lösungsmittel oder Lösungsmittelgemisch kann dabei in einem Bereich von bis zu 20 Gew.-%, vorzugsweise von 1 bis 10 Gew.-%, weiter bevorzugt von etwa 3 bis 5 Gew.-%, jeweils bezogen auf das Gesamtgewicht der Pigmentformulierung, liegen.

Die der Erfindung zugrundeliegende Aufgabe wird ferner durch ein Beschichtungssystem gelöst, das die erfindungsgemäßen Metalleffektpigmente enthält. Das Beschichtungssystem kann beispielsweise aus der Gruppe, die aus Farben, Druckfarben, Lacken, Pulverlacken, Elektrotauchlacken, Kunststoffen und Kosmetika besteht, ausgewählt werden.

Aufgrund der außerordentlichen Beständigkeit der erfindungsgemäßen Metalleffektpigmente gegenüber Chemikalien können diese in den verschiedensten vorgenannten Beschichtungssystemen verwendet werden, ohne dabei anfällig gegenüber Korrosion zu sein.

Die der Erfindung zugrundeliegende Aufgabe wird auch durch einen beschichteten Gegenstand gelöst, der mit dem erfindungsgemäßen Beschichtungssystem beschichtet ist. Solche Gegenstände sind beispielsweise Karosserien, Gehäuse, Metallelemente, Fassadenelemente, etc..

### Beispiele

Die erfindungsgemäßen Metalleffektpigmente zeichnen sich durch eine außergewöhnlich hohe Chemikalienbeständigkeit aus, was anhand der nachfolgenden Beispiele aufgezeigt wird. Die Beispiele dienen lediglich der weiteren Veranschaulichung der Erfindung und begrenzen nicht den Umfang der Erfindung.

### Erfindungsgemäßes Beispiel 1

100 g STAPA^{®} METALLIC 501 (ECKART GmbH & Co. KG, Fürth, Deutschland) werden in Testbenzin suspendiert, so dass eine 20 Gew.-%ige Suspension entsteht. Die Pigmentpaste wird bei 50°C ca. 5 Minuten in Testbenzin vordispergiert und danach wird auf 150°C aufgeheizt. Über 2 Stunden wird hierzu eine Mischung aus 14 g Trimethylolpropantriacrylat und 3.5 g Vinyltrimethoxysilan unter gleichmäßigem Rühren zugetropft. Das Produkt wird nach Filtrieren und Waschen in Testbenzin als Testbenzinpaste isoliert.

### Erfindungsgemäßes Beispiel 2

100 g STAPA^{®} METALLUX 214 (ECKART GmbH & Co.KG, Fürth) werden analog Beispiel 1 in Testbenzin suspendiert, vordispergiert und aufgeheizt. Über 2 Stunden wird hierzu eine Mischung aus 11 g Trimethylolpropantriacrylat und 2.75 g Vinyltrimethoxysilan unter gleichmäßigem Rühren zugetropft. Das Produkt wird nach Filtrieren und Waschen in Testbenzin als Testbenzinpaste isoliert.

### Erfindungsgemäßes Beispiel 3

100 g STAPA^{®} METALLIC 501 (ECKART GmbH & Co.KG) werden in Testbenzin suspendiert, so dass eine 20 Gew.-%ige Suspension entsteht. Die Pigmentpaste wird bei ca. 50°C ca. 5 Minuten in Testbenzin vordispergiert und danach wird auf 150°C aufgeheizt. Über 2 Stunden wird hierzu eine Mischung aus 15 g 1,6-Hexandioldimethacrylat und 3.75 g (Methacryloxymethyl)methyldimethoxysilan unter gleichmäßigem Rühren zugetropft. Das Produkt wird nach Filtrieren und Waschen in Testbenzin als Testbenzinpaste isoliert.

### Vergleichsbeispiele

ASAHI CR 21: Polymer-beschichtetes Aluminiumpigment, erhältlich bei Fa. Asahi, Japan.
ASAHI O-2100: Polymer-beschichtetes Aluminiumpigment, erhältlich bei Fa. Asahi, Japan.
TOYAL 616EB: Polymer-beschichtetes Aluminiumpigment, erhältlich bei Fa. Toyal, Japan.
Silberline SBC 5000-20Z: Polymer-beschichtetes Aluminiumpigment, erhältlich bei Fa. Silberline, England.
SHOWA 260 EA: Polymer-beschichtetes Aluminiumpigment, erhältlich bei Fa. Showa, Japan.
ECKART NCP 501: Polyacrylat-beschichtetes Aluminiumpigment, erhältlich bei Fa. Eckart, Fürth, Deutschland.

### Korrosionsstabilitätsuntersuchunaen

Die gemäß den erfindungsgemäßen Beispielen 1 bis 3 hergestellten Effektpigmente sowie die als Vergleichsbeispiele herangezogenen Pigmente wurden in ein 1-Komponenten Polyurethanlackystem, in einer Konzentration von jeweils 6 Gew.-%, bezogen auf das Gesamtgewicht des Lackes eingearbeitet.

Diese mit den erfindungsgemäßen Metalleffektpigmenten bzw. zu Vergleichszwecken verwendeten Metalleffektpigmente versehenen 1 K-Polyurethanlacksysteme wurde jeweils mittels einer HVLP-Lackpistole (HVLP: High Volume-Low Pressure) auf PMMA-Platten (Polymethylmethacrylat-Platten) aufgebracht und nachfolgend bei 60 °C im Trockenschrank für 12 hrs ausgehärtet. 24 hrs nach der Aushärtung des jeweiligen Lacksystems wurde die PMMA-Platte jeweils mit 1 M NaOH betropft, wobei die Tropfengröße einen Durchmesser von 10 bis 17 mm aufwiesen. Nach dem Aufbringen der Tropfen bei 22°C ließ man die Tropfen für 15 min., 30 min., 60 min., 120 min. und 180 min. auf die lackierte PMMA-Platte einwirken, wonach die Tropfen unter fließendem Wasser abgespült und die PMMA-Platten an der Luft bei 22 °C getrocknet wurden. Sodann erfolgte eine visuelle Bewertung der Tropfenbereiche auf den PMMA-Platten nach dem Vergrauungsgrad.

Der Vergrauungsgrad wurde dabei nach folgendem Wertsystem beurteilt:
0 Punkte: keinerlei Vergrauung erkennbar
1 Punkt: erste gerade erkennbare Vergrauungserscheinung
2 Punkte: deutliche Vergrauungserscheinung
3 Punkte: vollständige Vergrauung

Die über die obengenannten fünf Zeiträume (15 min., 30 min., 60 min., 120 min., 180 min.) jeweils ermittelten Punkte wurden summiert.

Die summierten Werte sind in der nachfolgenden Tabelle 1 für sämtliche untersuchten Pigmente wiedergegeben.

**Tabelle 1: Forcierter Chemikalientest im 1-Komponenten Polyurethansystem**

| Typ | D₅₀ (µm) | Summe |
|---|---|---|
| ASAHI CR 21 | 27,80 | 10 |
| ASAHI O-2100 | 12 | 12 |
| TOYAL 616EB | 17 | 12 |
| Silberline SBC 5000-20Z | 11 | 11 |
| SHOWA 260 EA | 15 | 13 |
| ECKART NCP 501 | 22 | 10 |
| **Erf.-gem. Beispiel 1** | **21** | **3** |
| **Erf.-gem. Beispiel 2** | **35** | **2** |
| **Erf.gem. Beispiel 3** | **21** | **2** |

Die erfindungsgemäßen Metalleffektpigmente weisen ferner eine sehr gute Wetterbeständigkeit sowie ein sehr gutes Dispergierverhalten auf. Aufgrund ihrer mechanischen Stabilität und chemischen Beständigkeit bzw. Korrosionsstabilität sind die erfindungsgemäßen Metalleffektpigmente sehr gut für die unterschiedlichsten Anwendungsgebiete und Farb- bzw. Lackssysteme geeignet. Die erfindungsgemäßen Metalleffektpigmente können vorteilhafterweise somit in konventionellen lösungsmittelbasierten als auch in wässrigen Lacksystemen verwendet werden.

## Patentansprüche

1. Metalleffektpigmente mit einem plättchenartigen Metallkern und einer den plättchenartigen Metallkern umhüllenden homogenen Kunstharzbeschichtung,
**dadurch gekennzeichnet,**
**dass** die Kunstharzbeschichtung Polyacrylat und/oder Polymethacrylat sowie organofunktionelles Silan umfasst.

2. Metalleffektpigmente nach Anspruch 1,
**dadurch gekennzeichnet,**
**dass** das organofunktionelle Silan in dem Polyacrylat und/oder Polymethacrylat vorliegt und/oder einpolymerisiert ist.

3. Metallpigmente nach Anspruch 1,
**dadurch gekennzeichnet,**
**dass** die Kunstharzbeschichtung kein anorganisches Netzwerk aufweist.

4. Metallpigmente nach einem der vorstehenden Ansprüche,
**dadurch gekennzeichnet,**
**dass** das Polyacrylat und/oder Polymethacrylat mit oder aus Verbindungen mit mehreren Acrylat- und/oder Methacrylatgruppen aufgebaut ist.

5. Metallpigmente nach Anspruch 4,
**dadurch gekennzeichnet,**
**dass** die Verbindungen mit mehreren Acrylatgruppen und/oder Methacrylatgruppen jeweils mindestens drei Acrylat- und/oder Methacrylatgruppen aufweisen.

6. Metalleffektpigmente nach einem der vorstehenden Ansprüche,
**dadurch gekennzeichnet,**
**dass** das Gewichtsverhältnis von Polyacrylat und/oder Polymethacrylat zu organofunktionellem Silan 10:1 1 bis 0,5:1 beträgt.

7. Metalleffektpigmente nach einem der vorstehenden Ansprüche,
**dadurch gekennzeichnet,**
**dass** die mittlere Schichtdicke des Kunstharzüberzugs 20 bis 200 nm beträgt.

8. Metalleffektpigmente nach Anspruch 4,
**dadurch gekennzeichnet,**
**dass** die Verbindungen mit mehreren Acrylat- und/oder Methacrylatgruppen jeweils mindestens zwei Acrylat- und/oder Methacrylatgruppen aufweisen und vorzugsweise aus der Gruppe, die aus Dipentaerythritolpentaacrylat, Pentaerythritoltriacrylat, Pentaerythritoltetraacrylat, Trimethylolpropantriacrylat, Trimethylolpropantrimethacrylat, Tris-(2-hydroxyethyl)isocyanurattriacrylat 1,6-Hexandioldimethacrylat und deren Mischungen besteht, ausgewählt wird.

9. Metalleffektpigmente nach einem der vorstehenden Ansprüche,
**dadurch gekennzeichnet,**
**dass** das organofunktionelle Silan aus der Gruppe, die aus 2-Methacryloxyethyltrimethoxysilan, 2-Methacryloxyethyltriethoxysilan, 3-Methacryloxypropyltriethoxysilan, 3-Methacryloxypropyltrimethoxysilan, (Methacryloxymethyl)methyldimethoxysilan, Vinyltrimethoxysilan und deren Mischungen besteht, ausgewählt ist.

10. Metalleffektpigmente nach einem der vorstehenden Ansprüche,
**dadurch gekennzeichnet,**
**dass** der plättchenartige Metallkern Metalle aus der Gruppe, die aus Aluminium, Kupfer, Zink, Zinn, Goldbronze, Messing, Eisen, Titan, Chrom, Nickel, Silber, Gold, Stahl sowie deren Legierungen und Gemischen davon besteht, enthalten oder daraus bestehen.

11. Metalleffektpigmente nach einem der vorstehenden Ansprüche,
**dadurch gekennzeichnet,**
**dass** der plättchenartige Metallkern ein Aluminium- oder Goldbronzepigment ist.

12. Verfahren zur Herstellung der Metalleffektpigmente nach einem der vorstehenden
Ansprüche,
**dadurch gekennzeichnet,**
**dass** der plättchenartige Metallkern in Gegenwart von Acrylatverbindungen und/oder Methacrylatverbindungen und organofunktionellem Silan umhüllend und homogen beschichtet wird.

13. Verwendung der Metalleffektpigmente nach einem der Ansprüche 1 bis 11 in
Farben, Druckfarben, Lacken, Pulverlacken, Kunststoffen und Kosmetika.

14. Beschichtungssystem,
**dadurch gekennzeichnet,**
**daß** Beschichtungssystem Metalleffektpigmente nach einem der Ansprüche 1 bis 11 enthält.

15. Beschichteter Gegenstand,
**dadurch gekennzeichnet,**
**daß** der Gegenstand mit einem Beschichtungssystem nach Anspruch 14 beschichtet ist.
